# EUROPEAN PATENT APPLICATION

(11) **EP 2 416 227 A1**
(43) Date of publication of application: **08.02.2012**
(21) Application number: 11006260.1
(22) Date of filing: 29.07.2011
(51) Int. Cl.: G05B 19/409

(54) **Monitoring system**

(30) Priority: 02.08.2010 IT GE20100087
(71) Applicant: Sogenai S.p.A., 16128 Genova (GE) (IT)
(72) Inventor: Ottonelli, Enrico, 16148 Genova (IT)
(74) Representative: Cacciamani, Clizia

(57) **Abstract**

A supervisory system for web-oriented technology-based control and/or operation of a plurality of devices located in a given area, comprising a system server interfaced with said devices and connected to a telecommunications network, such as a TCP/IP network, a software interface being provided between said server and said devices, the control and/or operating software being provided with a user interface accessible via a web browser loaded on a remote processing unit.

## Description

The present invention relates to systems for supervising and controlling, by means of a computer network, a plurality of peripherals interfaced with said network; particularly, it relates to a supervisory system based on the web-oriented technology and intended for controlling detection and actuation devices existing in a given area, such as for example a ship.

At present, the management of a system for operating and controlling devices located in a given area by a computer includes the installation, on the machine in question, of the software intended for establishing an interface with said devices. However, although this solution is widely used, it has the common drawbacks associated with compatibility between the software itself and the operating environment of the machine, the viewing systems installed on the machine as well as the drivers available thereon. In addition to this obvious problem, if the machine must be replaced due to a malfunction or fault, any new machine must be completely compatible with the machine to be replaced therewith since, otherwise, there is the risk that it cannot communicate with the operating and control software.

Therefore, the object of the present invention is to provide a system which allows web-oriented technology-based operation and/or control of a series of devices positioned in a given area, without the need for particular system requirements on a given machine and without the risk that replacement or modification of features of the machine may affect its ability to communicate with said system.

Therefore, the present invention relates to a supervisory system for web-oriented technology-based control and/or operation of a plurality of devices located in a given area, comprising a system server interfaced with said devices and connected to a telecommunications network, such as a TCP/IP network, a software interface being provided between said server and said devices, the control and/or operating software being provided with a user interface accessible via a web browser loaded on a remote processing unit. In particular, the access to the operating and/or control software interface is provided via an access code. It is also possible to define various access levels depending on the identity of the user, namely the coding tool through which the user accesses the system.

In particular, the software for interfacing said devices, which may be independent or organized as subsystems, to the server will use the OPC (OLE for process control) protocols, namely a standard based on OLE (object linking and embedding), CMO (component object model) and DCMO (distributed component object model) technologies developed by Microsoft® for the family of Microsoft Windows® programs; the standard includes a series of objects, interfaces and methods which are grouped together in specifications generally referred to as OPC Data Access (OPC-DA).

In a preferred embodiment, the supervisory system is applied to safety and control systems for a ship.

Further advantages and characteristic features will become clear from the following description of an embodiment of the present invention provided, by way of a non-limiting example, with reference to the sole drawing in which:

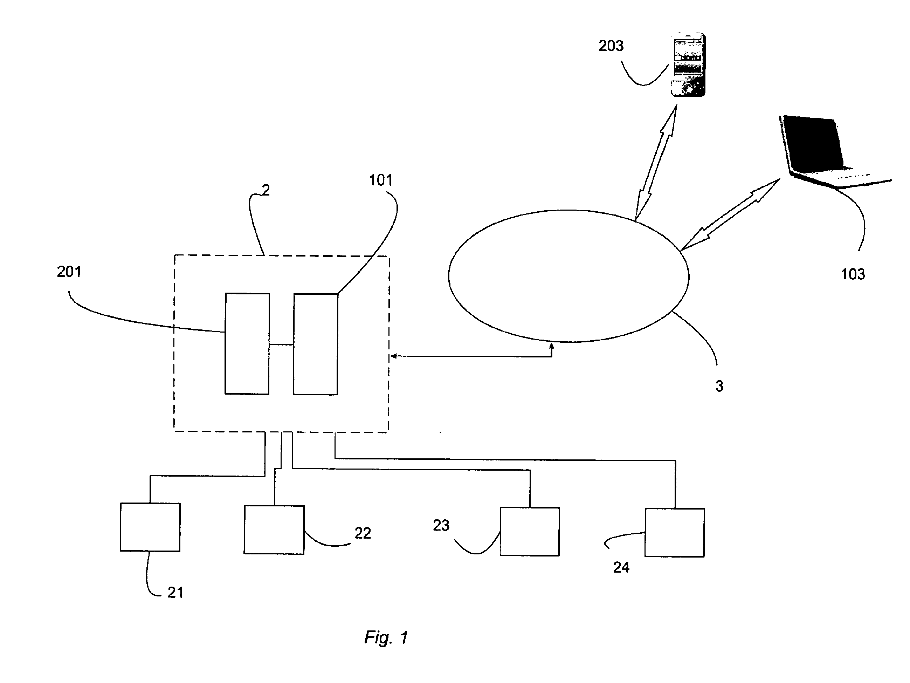

Figure 1 is a block diagram showing the system according to the present invention.

Figure 1 shows a block diagram illustrating the system according to the present invention; two processing units 101 and 201 form the server in a so-called redundant hot back-up assembly. The server formed in this way is connected, on one side, to devices 21, 22, 23 and 24 through the software interface established by the OPC protocol. The server is provided with suitable devices for the connection to a telecommunications network 3 based on the TCP/IP protocol.

In this way, the web browser loaded on a remote device, such as the portable device 103 or the handheld device 203, allows the software 2 to be accessed, thereby enabling viewing and/or operational capabilities for workstations which in fact are only able to access the network 3, without the need for other particular requirements. Obviously, the access may be suitably coded and enabled with various levels of operating capacity, namely a different degree of access capacity will be permitted depending on the identification of the user (system administrator or other user).

This is an HMI (Human Machine Interface) viewing system which is independent of the type of operating system installed and the hardware used, and which is based on a web-oriented technology never used before in the naval field. As a result, the system is highly flexible, independent of third party licences and designed to ensure continuity in terms of operation, development/updating and long-term assistance, employing the latest and most widely used programming systems, thereby ensuring its complete future compatibility with new software and hardware systems. Due to its innovative design, this new viewer (TCP/IP network based-client/server technology) surpasses the conventional idea of a viewer since it will be perfectly integrated in a browser without requiring any installation, but only the need to have a user account and associated password, allowing at the same time all the functions of the old browser to be performed, the basic system being developed on Microsoft Internet Explorer®. The later systems will be compatible with other browsers since the technology used ensures this potential capacity. As a result, the entire system may be installed on an ordinary personal computer without any special requirements.

This new design aims to incorporate all the functions of a standard system, with the addition of all the advantages arising from the potential of web tools, such as:
- basic functions, for ensuring total control of the subsystems;
- graphics functions, for providing simpler and more intuitive system access;
- advanced functions, arising from the idea of managing a supervisory system on a web platform.

This innovative method of managing a supervisory system using a web platform offers many advantages and prospects for the future; therefore, it is possible to employ viewer workstations which do not require any pre-installation or licence, but only an Internet browser.

In view of the features mentioned above, the system will no longer be limited to the viewer workstations envisaged by the conventional system (E.C.R., W.H., Chief Eng.), but may be used on any personal computer equipped with an Ethernet board or Wi-Fi board. Breakage of a viewer would not involve any on-board maintenance, since it would be sufficient to replace the viewer with any other model. Any updating of the system, due to the modification of the installation, would no longer involve updating of all the supervising PCs but only of the viewers.

The system envisages two redundant base units which back-up each other and which are intended for acquiring/sending data from/to the field through a specially designed software which is flexible and able to be customized. Communication with N workstations is possible via any type of TCP/IP network (Ethernet LAN, Wi-Fi WLAN, private intranet) from any computer or handheld device provided with any one of the widely available Internet browsers, since the viewer is designed to operate in a web environment and does not require any installation or special set-up of the workstation itself.

The supervisory system designed in accordance with the criteria defined by the present invention essentially allows the following:
- use of pre-existing networks such as Ethernet LAN, intranet and Wi-Fi local networks;
- easy installation/implementation of any number and any type of workstation without special hardware/software requirements in any on-board location, with the possibility of increasing the number thereof at any time.

## Claims

1. A supervisory system for web-oriented technology-based control and/or operation of a plurality of devices located in a given area, comprising a system server interfaced with said devices and connected to a telecommunications network, such as a TCP/IP network, a software interface being provided between said server and said devices, the control and/or operating software being provided with a user interface accessible via a web browser loaded on a remote processing unit.

2. The system according to Claim 1, wherein the access to the user interface of the operating and/or control software is provided via an access code.

3. The system according to Claim 2, wherein the system can be accessed with different levels of operating capacity.

4. The system according to Claim 1 or Claim 2, wherein the software for interfacing said devices to the server uses the protocol OPC (OLE for process control).

5. The system according to any one of the preceding Claims 1 to 3, wherein said supervisory system is applied to safety and control systems for a ship.
